# EUROPEAN PATENT APPLICATION

(11) **EP 4 668 429 A1**
(43) Date of publication of application: **24.12.2025**
(21) Application number: 23922893.5
(22) Date of filing: 05.12.2023
(51) Int. Cl.: H01M 50/204, H01M 50/569, H01M 50/583

(54) **BATTERY MODULE**

(30) Priority: 15.02.2023 JP 2023021503
(71) Applicant: AESC Japan Ltd., Yokohama-Shi, Kanagawa 220-0012 (JP)
(72) Inventor: IZAWA, Takami, Zama-shi, Kanagawa 252-0012 (JP); NAKAGAWA, Fumiya, Zama-shi, Kanagawa 252-0012 (JP); NAKAI, Masayuki, Zama-shi, Kanagawa 252-0012 (JP)
(74) Representative: Mathys & Squire
(86) International application number: PCT/JP2023/043410
(87) International publication number: WO 2024/171560

(57) **Abstract**

A battery module (1) includes a battery cell (100), a fuse (233) electrically connected to the battery cell (100) and extending in a predetermined direction, and a surrounding heat resistant body (211) and a covering heat resistant body (311) at least partially surrounding the fuse (233) around the predetermined direction.

## Description

### TECHNICAL FIELD

The present invention relates to a battery module.

### BACKGROUND ART

In recent years, various battery modules have been developed. As described in Patent Document 1, for example, a battery module includes a plurality of battery cells stacked in a predetermined direction and a bus bar electrically connected to the plurality of battery cells. In the battery module described in Patent Document 1, the bus bar includes a fuse portion. This battery module further includes an insulation cover surrounding the perimeter of the bus bar and a module cover fixed on top of the insulation cover.

### RELATED DOCUMENT

### PATENT DOCUMENT

Patent Document 1: International Patent Publication No. WO2019/069837

### DISCLOSURE OF THE INVENTION

### TECHNICAL PROBLEM

As described in Patent Document 1, for example, a fuse may be electrically connected to a battery cell. When the fuse melts, the fuse may not only fall below the fuse but also scatter around the fuse. If the fuse scatters around the fuse, however, it may be difficult to reduce the likelihood of the fuse scattering affecting the components existing around the fuse.

An example of the object of the present invention is to reduce the likelihood of the fuse scattering affecting the components around the fuse. Another object of the present invention is clarified by description of the present specification.

### SOLUTION TO PROBLEM

An aspect of the present invention is as follows.
[1] A battery module including:
   a battery cell;
   a fuse electrically connected to the battery cell and extending in a predetermined direction; and
   a heat resistant body at least partially surrounding the fuse around the predetermined direction.
[2] The battery module according to the [1], further including:
   a voltage detection portion electrically connected to the battery cell; and
   a holding body holding the voltage detection portion, wherein
   the holding body is provided with at least a part of the heat resistant body.
[3] The battery module according to [1] or [2], further including
   an accommodation body accommodating the battery cell, wherein
   the accommodation body includes at least a part of the heat resistant body.

### ADVANTAGEOUS EFFECTS OF INVENTION

According to the aspect described above of the present invention, the likelihood of the fuse scattering affecting the components around the fuse can be reduced.

### BRIEF DESCRIPTION OF THE DRAWINGS

[Fig. 1] A perspective view of a battery module according to an embodiment.
[Fig. 2] An exploded perspective view of the battery module according to the embodiment.
[Fig. 3] An exploded enlarged perspective view of the front right side part of the battery module according to the embodiment.
[Fig. 4] An A-A sectional view of Fig. 1.
[Fig. 5] A diagram illustrating a variant of Fig. 4.

### DESCRIPTION OF EMBODIMENTS

In the following, an embodiment and a variant of the present invention is described with reference to the drawings. In all the drawings, a similar component is denoted with a similar reference sign, and description thereof is omitted as appropriate.

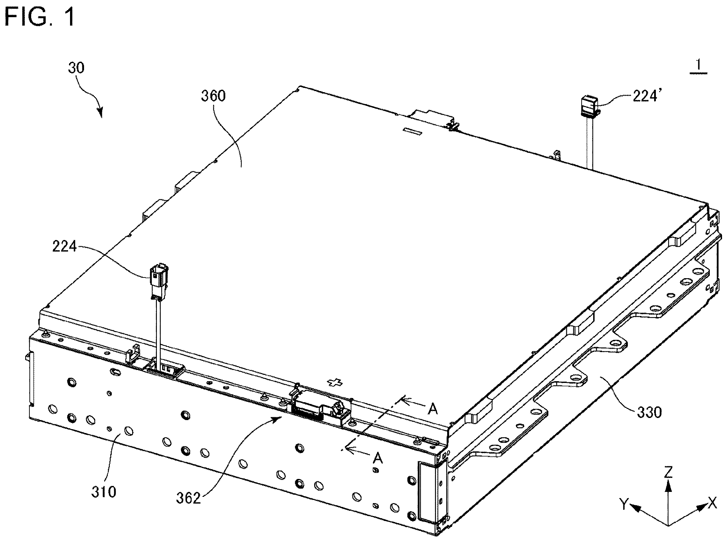

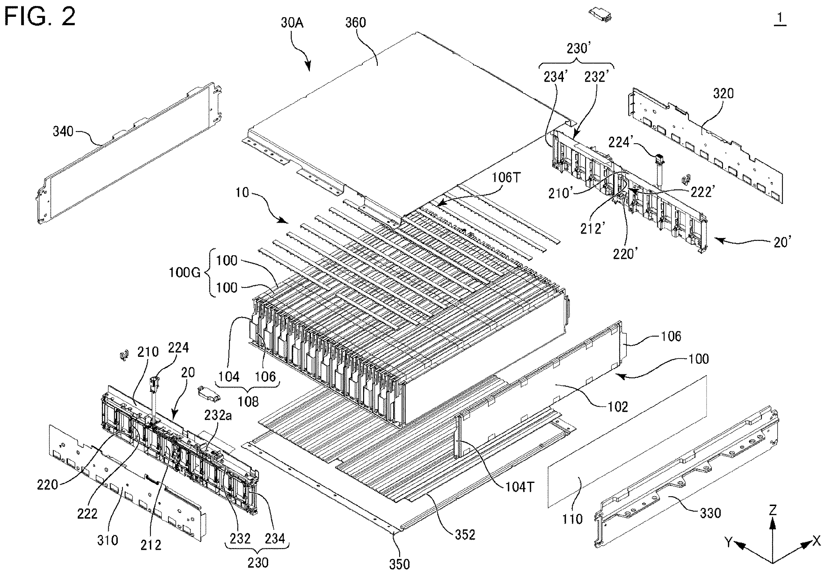

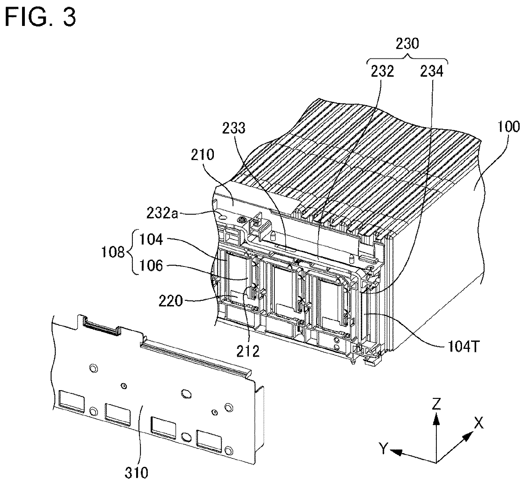

Fig. 1 is a perspective view of a battery module 1 according to the embodiment. Fig. 2 is an exploded perspective view of the battery module 1 according to the embodiment. Fig. 3 is an exploded enlarged perspective view of the front right side part of the battery module 1 according to the embodiment.

In each of the drawings, the arrows indicating an X direction, a Y direction, and a Z direction are illustrated for description. Hereinafter, unless otherwise specified, the leading end side of the arrow indicating the X direction is a rear side of the battery module 1, and the base end side of the arrow indicating the X direction is a front side of the battery module 1. The Y direction is orthogonal to the X direction. The Y direction is a left-right direction of the battery module 1. Hereinafter, unless otherwise specified, the leading end side of the arrow indicating the Y direction is a left side of the battery module 1, and the base end side of the arrow indicating the Y direction is a right side of the battery module 1. The Z direction is orthogonal to both the X direction and the Y direction. The Z direction is an up-down direction of the battery module 1. Hereinafter, unless otherwise specified, the leading end side of the arrow indicating the Z direction is a top side of the battery module 1, and the base end side of the arrow indicating the Z direction is a bottom side of the battery module 1. Hereinafter, the direction perpendicular to the X direction is referred to as a YZ plane direction, the direction perpendicular to the Y direction is referred to as a ZX plane direction, and the direction perpendicular to the Z direction is referred to as an XY plane direction, as necessary. The relationship between each of the X direction, the Y direction, and the Z direction, and each of the front-rear direction, the left-right direction, and the up-down direction of the battery module 1 is not limited to the example described above.

The configuration of the battery module 1 is described with reference to Figs. 1 to 3.

The battery module 1 includes a cell stack 10, a front voltage detection device 20, a rear voltage detection device 20', and an accommodation body 30.

As illustrated in Fig. 2, the cell stack 10 includes a plurality of battery cells 100 and a plurality of compression pads 110. The plurality of battery cells 100 and the plurality of compression pads 110 are arranged alternately to each other in the Y direction. The compression pads 110 is positioned on opposite sides of each of the battery cells 100 in the Y direction. The plurality of battery cells 100 and the plurality of compression pads 110 are compressed in the Y direction by a right plate 330 and a left plate 340 described later. Thus, the deviation of the battery cell 100 in the ZX plane direction can be reduced.

As illustrated in Fig. 2, the longitudinal direction of each of the battery cells 100 is approximately parallel to the X direction. The transverse direction of each of the battery cells 100 is approximately parallel to the Z direction. The thickness direction of each of the battery cells 100 is approximately parallel to the Y direction. The plurality of battery cells 100 are stacked in the Y direction. The shape of each of the battery cells 100 is not limited to this example.

Each of the battery cells 100 includes an unillustrated battery element, an exterior material 102, a positive electrode tab 104, and a negative electrode tab 106. The battery element includes a plurality of unillustrated positive electrodes and a plurality of unillustrated negative electrodes alternately stacked in the Y direction, and an unillustrated separator placed between the positive electrode and the negative electrode that are adjacent in the Y direction. The exterior material 102 seals the battery element and unillustrated electrolytic liquid. The positive electrode tab 104 is electrically connected to the positive electrode of the battery element. The positive electrode tab 104 is drawn from one of X-directional opposite sides of the exterior material 102. The negative electrode tab 106 is electrically connected to the negative electrode of the battery element. The negative electrode tab 106 is drawn from the other one of the X-directional opposite sides of the exterior material 102. However, the configuration of each of the battery cells 100 is not limited to this example.

In the embodiment, a plurality of cell groups 100G is connected in series from the cell group 100G placed at one end in the Y direction to the cell group 100G placed at the other end of in the Y direction. Each of the cell groups 100G includes a plurality of the battery cells 100 connected in parallel. In the embodiment, each of the cell groups 100G includes two of the battery cells 100 adjacent to each other in the Y direction. The two positive electrode tabs 104 drawn from the two battery cells 100 included in each of the cell groups 100G are oriented toward the same side in the X direction. The two negative electrode tabs 106 drawn from the two battery cells 100 included in each of the cell groups 100G are oriented toward the same side in the X direction. The positive electrode tabs 104 and the negative electrode tabs 106 drawn from one of the cell groups 100G adjacent in the Y direction and the positive electrode tabs 104 and the negative electrode tabs 106 drawn from the other of the cell groups 100G adjacent in the Y direction are oriented opposite to each other in the X direction. The two cell groups 100G adjacent to each other in the Y direction includes a tab group 108 placed in front or rear of the two cell groups 100G. The tab group 108 includes the positive electrode tab 104 and the negative electrode tab 106 joined to each other. The positive electrode tab 104 and the negative electrode tab 106 included in the tab group 108 are joined together by leaser welding, for example. Thus, a plurality of the tab groups 108 placed in front of the cell stack 10 and a plurality of the tab groups 108 placed in rear of the cell stack 10 are alternately arranged.

In the embodiment, the positive electrode tabs 104 are drawn from the two battery cells 100 placed at the right end of the cell stack 10 toward the front. Hereinafter, these positive electrode tabs 104 are referred to as terminal positive electrode tabs 104T as necessary. However, the number of the terminal positive electrode tabs 104T may be only one, or three or more. The negative electrode tabs 106 are drawn out from the two battery cells 100 placed at the left end of the cell stack 10 toward the rear. Hereinafter, these negative electrode tabs 106 are referred to as terminal negative electrode tabs 106T as necessary. However, the number of the terminal negative electrode tabs 106T may be only one, or three or more.

The configuration of the cell stack 10 is not limited to the example described above. For example, each of the cell groups 100G may include three or more of the battery cells 100 connected in parallel. Alternatively, a plurality of the single battery cells 100 may be connected in series from the battery cell 100 placed at one end in the Y direction to the battery cell 100 placed at the other end in the Y direction. The positions at which the terminal positive electrode tab 104T and the terminal negative electrode tab 106T are arranged are not limited to the example described above. The positions of the terminal positive electrode tab 104T and the terminal negative electrode tab 106T change according to the number of the cell groups 100G. For example, depending on the number of the cell groups 100G, both the terminal positive electrode tab 104T and the terminal negative electrode tab 106T are positioned in front or rear of the cell stack 10.

As illustrated in Fig. 2, the front voltage detection device 20 includes a front holding body 210, a plurality of front voltage detection portions 220, a plurality of front voltage detection lines 222, a front connector 224, and a positive electrode bus bar 230.

The front holding body 210 is positioned in front of the cell stack 10. The front holding body 210 defines a plurality of front openings 212. Each of the plurality of tab groups 108 placed in front of the cell stack 10 is exposed toward the front through each of the plurality of front openings 212. The front holding body 210 integrally holds the plurality of front voltage detection portions 220 and the plurality of front voltage detection lines 222.

The plurality of front voltage detection portions 220 is attached to the front holding body 210. Each of the plurality of front voltage detection portions 220 is joined with the front surface of each of the plurality of tab groups 108 placed in front of the cell stack 10 by laser welding, for example. The plurality of front voltage detection portions 220 is electrically connected to the front connector 224 via the plurality of front voltage detection lines 222. The plurality of front voltage detection lines 222 is routed via the front holding body 210. In the embodiment, as the front holding body 210 is installed in an appropriate position relative to the cell stack 10, each of the plurality of front voltage detection portions 220 can be arranged in an appropriate position relative to each of the plurality of tab groups 108 placed in front of the cell stack 10.

The positive electrode bus bar 230 is positioned at the right end of the front holding body 210. The positive electrode bus bar 230 is approximately L-shaped. Specifically, the positive electrode bus bar 230 includes a front lateral conductor 232 and a front vertical conductor 234. The front lateral conductor 232 extends approximately parallel to the Y direction. The front vertical conductor 234 extends downward from the right end of the front lateral conductor 232 approximately parallel to the Z direction.

The front lateral conductor 232 functions as a terminal for electrically connecting to an external device such as another battery module. Specifically, a fastener hole 232a is provided at the left end of the front lateral conductor 232. An unillustrated fastener for fastening an unillustrated bus bar electrically connected to the unillustrated external device such as another battery module can be installed in the fastener hole 232a.

As illustrated in Fig. 3, the front lateral conductor 232 includes a fuse 233. The fuse 233 is placed on the right side of the fastener hole 232a. The fuse 233 extends approximately parallel to the Y direction. A notch is provided behind the fuse 233 at the front lateral conductor 232. Thus, the cross section of the fuse 233 perpendicular to the Y direction is less than the cross sections of the front lateral conductor 232 at opposite sides of the fuse 233 perpendicular to the Y direction. As a result, the fuse 233 can melt when the current equal to or greater than a predetermined value flows through the fuse 233. However, the structure of the fuse 233 is not limited to this example. For example, the fuse 233 may be defined by a notch provided at the front part of the lateral conductor 232. Alternatively, the fuse 233 may be defined by notches provided at both the front part and the rear part of the front lateral conductor 232. In this example, the fuse 233 is placed at an approximate center of the front lateral conductor 232 in the X direction, for example. However, the fuse 233 may displaced from the X-directional approximate center of the front lateral conductor 232 to the X direction. Alternatively, the thickness in the Z direction of the front lateral conductor 232 may be partially reduced. In this case, the fuse 233 is a part at which the thickness in the Z direction of the front lateral conductor 232 is partially reduced.

The front vertical conductor 234 is electrically connected to the terminal positive electrode tab 104T. The terminal positive electrode tab 104T is placed on the right of the front vertical conductor 234. In the embodiment, the terminal positive electrode tab 104T and the front vertical conductor 234 are joined together by laser welding. However, the method of joining the terminal positive electrode tab 104T and the front vertical conductor 234 is not limited to laser welding.

The rear voltage detection device 20' is the same as the front voltage detection device 20 except for the following points. The rear voltage detection device 20' includes a rear holding body 210', a plurality of rear voltage detection portions 220', a plurality of rear voltage detection lines 222', a rear connector 224', and a negative electrode bus bar 230'.

The rear holding body 210' is positioned in rear of the cell stack 10. The rear holding body 210'defines a plurality of rear openings 212'. Each of the plurality of tab groups 108 placed in rear of the cell stack 10 is exposed toward the rear through each of the plurality of rear openings 212'. The rear holding body 210' integrally holds the plurality of rear voltage detection portions 220' and the plurality of rear voltage detection lines 222'.

The plurality of rear voltage detection portions 220' is attached to the rear holding body 210'. Each of the plurality of rear voltage detection portions 220' is joined with the rear surface of each of the plurality of tab groups 108 placed in rear of the cell stack 10 by laser welding, for example. The plurality of rear voltage detection portions 220' is electrically connected to the rear connector 224' via the plurality of rear voltage detection lines 222'. The plurality of rear voltage detection lines 222' is routed via the rear holding body 210'. In the embodiment, as the rear holding body 210' is installed in an appropriate position relative to the cell stack 10, each of the plurality of rear voltage detection portions 220' can be arranged in an appropriate position relative to each of the plurality of tab groups 108 placed in rear of the cell stack 10.

The negative electrode bus bar 230' is positioned at the left end of the rear holding body 210'. The negative electrode bus bar 230' is approximately L-shaped. The negative electrode bus bar 230' includes a rear lateral conductor 232' and a rear vertical conductor 234'. The rear lateral conductor 232' extends approximately parallel to the Y direction. The rear vertical conductor 234' extends downward from the left end of the rear lateral conductor 232' approximately parallel to the Z direction.

The rear lateral conductor 232' functions as a terminal for electrically connecting to an external device such as another battery module. The rear lateral conductor 232' includes a fuse, as does the front lateral conductor 232.

The rear vertical conductor 234' is electrically connected to the terminal negative electrode tab 106T. The terminal negative electrode tab 106T is placed on the left of the rear vertical conductor 234'. In the embodiment, the terminal negative electrode tab 106T and the rear vertical conductor 234' are joined together by laser welding. However, the method of joining which the terminal negative electrode tab 106T and the rear vertical conductor 234'is not limited to laser welding.

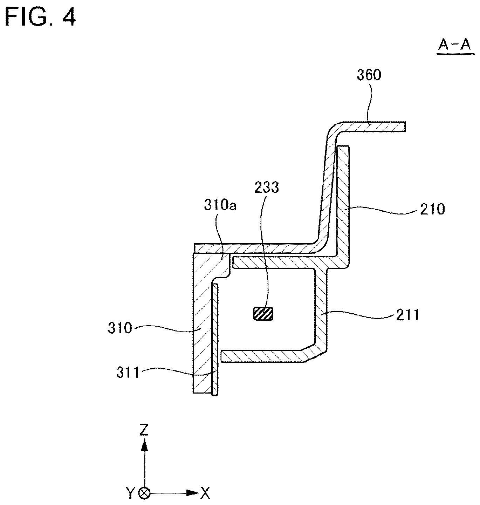

The accommodation body 30 includes a front plate 310, a rear plate 320, a right plate 330, a left plate 340, a bottom plate 350, and a top plate 360. As described later with reference to Fig. 4, the accommodation body 30 further includes a covering heat resistant body 311.

The front plate 310 covers the cell stack 10 and the front voltage detection device 20 from the front. The front plate 310 is a metal plate such as an aluminum plate, for example.

The rear plate 320 covers the cell stack 10 and the rear voltage detection device 20' from the rear. The rear plate 320 is a metal plate such as an aluminum plate, for example.

The right plate 330 covers the cell stack 10, the front voltage detection device 20, and the rear voltage detection device 20' from the right. The right plate 330 is made of a conductive material such as metal.

The left plate 340 covers the cell stack 10, the front voltage detection device 20, and the rear voltage detection device 20' from the left. The left plate 340 is made of a conductive material such as metal.

The bottom plate 350 covers the cell stack 10, the front voltage detection device 20, and the rear voltage detection device 20' from below. The bottom plate 350 is made of a conductive material such as metal. A thermally conductive adhesive 352 is placed between the top surface of the bottom plate 350 and the lower end of the cell stack 10. As a result, the heat generated from the cell stack 10 can be dissipated beneath the battery module 1 via the thermally conductive adhesive 352.

The top plate 360 covers the cell stack 10, the front voltage detection device 20, and the rear voltage detection device 20' from above. The top plate 360 is made of a conductive material such as metal.

Fig. 4 is A-A sectional view of Fig. 1. In Fig. 4, the white circle with the cross mark indicating the Y direction indicates that a direction from a base end to a leading end of the arrow indicating the Y direction is a direction from the front to the back of paper.

A surrounding heat resistant body 211 is provided to the front holding body 210. In the example illustrated in Fig. 4, the front holding body 210 and the surrounding heat resistant body 211 are integrated. The surrounding heat resistant body 211 contains a heat resistant material such as a heat resistant resin. Examples of the heat resistant materials include polypropylene (PP), polybutylene terephthalate (PBT), modified polyphenylene ether, silicone resin, silica fiber, and the like. The surrounding heat resistant body 211 may contain one of the heat resistant materials exemplified herein or may contain multiple heat resistant materials exemplified herein. The melting point of the heat resistant material is 150 degrees Celsius or greater and preferably 200 degrees Celsius or greater, for example.

The surrounding heat resistant body 211 surrounds at least a part of the fuse 233 around the Y direction. Specifically, in the example illustrated in Fig. 4, the surrounding heat resistant body 211 surrounds the fuse 233 around the Y direction except for the front of the fuse 233. In other words, the surrounding heat resistant body 211 is open toward the front. Thus, as viewed from the Y direction, the surrounding heat resistant body 211 is approximately U-shaped or approximately n-shaped.

In the example illustrated in Fig. 4, the surrounding heat resistant body 211 is spaced apart from the entire circumference of the fuse 233 around the Y direction of the fuse 233. Thus, as viewed from the Y direction, there is a gap between the fuse 233 and the surrounding heat resistant body 211 except the front of the fuse 233. As a result, the fuse 233 can drop into the gap below the fuse 233 when the fuse 233 is melted. Thus, the fuse 233 can be more easily disconnected by melting the fuse 233 as compared with the case where the fuse 233 and the surrounding heat resistant body 211 are in contact with each other. However, the surrounding heat resistant body 211 may be at least partially in contact with the fuse 233 except for the lower surface of the fuse 233.

A protrusion 310a is provided on the rear surface of the upper end of the front plate 310. The protrusion 310a protrudes rearward from the rear surface of the upper end of the front plate 310. The contact area of the top surface of the upper end of the front plate 310 and the bottom surface of the front end of the top plate 360 can be greater when the protrusion 310a is provided than when the protrusion 310a is not provided. Thus, the top surface of the upper end of the front plate 310 and the bottom surface of the front end of the top plate 360 can be more easily joined together by a joining method such as welding when the protrusion 310a is provided than when the protrusion 310a is not provided.

The covering heat resistant body 311 is provided on the rear surface of the front plate 310. The covering heat resistant body 311 contains a heat resistant material such as a heat resistant resin. Examples of the heat resistant material of the covering heat resistant body 311 includes the materials exemplified as the material of the surrounding heat resistant body 211. The heat resistant material forming the covering heat resistant body 311 and the heat resistant material forming the surrounding heat resistant body 211 may be different or the same. In one example, the covering heat resistant body 311 is attached to the rear surface of the front plate 310. Alternatively, the covering heat resistant body 311 may be formed on the rear surface of the front plate 310 by the deposition method such as vapor deposition.

The covering heat resistant body 311 covers at least a part of the rear surface of the front plate 310. In the example illustrated in Fig. 4, the upper end of the covering heat resistant body 311 is placed in front of the fuse 233. Thus, the surrounding heat resistant body 211 and the covering heat resistant body 311 together surround at least a part of the fuse 233 around the Y direction. As a result, the likelihood of the fuse 233 scattering affecting the components around the fuse 233 can be reduced.

In the example illustrated in Fig. 4, the covering heat resistant body 311 exposes the lower surface of the protrusion 310a. Accordingly, the covering heat resistant body 311 can be more easily installed on the rear surface of the front plate 310 as compared with the case where the covering heat resistant body 311 covers the lower surface of the protrusion 310a. In one example, the distance of the gap between the fuse 233 and the protrusion 310a may be a distance such that the scatters of the fuse 233 does not reach the protrusion 310a. In this example, the likelihood of the fuse 233 scattering affecting the protrusion 310a can be reduced even if at least a part of the protrusion 310a is exposed from the covering heat resistant body 311.

In the embodiment, the surrounding heat resistant body 211 is provided to the front holding body 210. Thus, the number of components of the battery module 1 can be reduced as compared with the case where a member different from the front holding body 210 is provided to provide the surrounding heat resistant body 211. Similarly, the covering heat resistant body 311 is provided to the front plate 310. Thus, the number of components of the battery module 1 can be reduced as compared with the case where a member different from the front plate 310 is provided to provide the covering heat resistant body 311.

The method of at least partially surrounding the fuse 233 by the heat resistant body around the Y direction is not limited to the method according to the embodiment.

For example, the covering heat resistant body 311 may not be provided. In this example, for example, a part of the surrounding heat resistant body 211 may be placed in front of the fuse 233. Alternatively, the front plate 310 itself may have heat resistant. Alternatively, the distance of the gap between the fuse 233 and the rear surface of the front plate 310 may be a distance such that the scatters does not reach the rear surface of the front plate 310. In this example, a heat resistant body may not be provided in front of the fuse 233.

In the embodiment, the heat resistant body around the fuse 233 of the positive electrode bus bar 230 has been described. However, a heat resistant body like the heat resistant body described in the embodiment may also be provided around a fuse different from the fuse 233 of the positive electrode bus bar 230. For example, a heat resistant body may also be provided around a fuse of the negative electrode bus bar 230'.

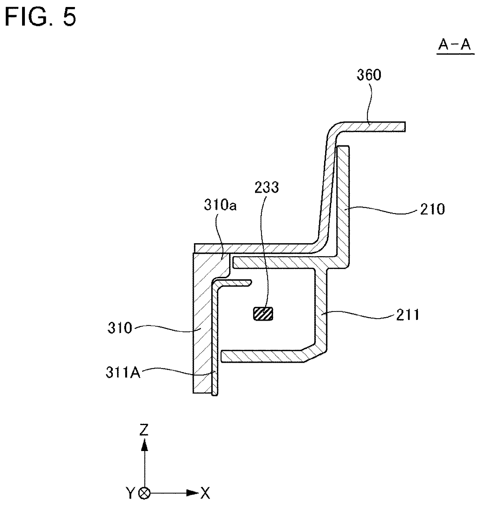

Fig. 5 is a diagram illustrating a variant of Fig. 4.

In the example illustrated in Fig. 5, as viewed from the Y direction, the upper end of a covering heat resistant body 311A is bent rearward at an approximate right angle. In other words, as viewed from the Y direction, the upper end of the covering heat resistant body 311A is approximately L-shaped. Thus, the upper end of the covering heat resistant body 311A covers the lower surface of the protrusion 310a. Accordingly, the protrusion 310a can be more easily protected from the scatters of the fuse 233 as compared with the case where the upper end of the covering heat resistant body 311A does not cover the lower surface of the protrusion 310a.

The embodiment and the variant of the present invention have been described with reference to the drawings, but these are examples of the present invention, and various configurations other than those described above can also be adopted.

This application claims priority based on Japanese patent application No. 2023-021503 filed on February 15, 2023, the disclosure of which is incorporated herein in its entirety by reference.

### REFERENCE SIGNS LIST

1 Battery module, 10 Cell stack, 20 Front voltage detection device, 20' Rear voltage detection device, 30 Accommodation body, 100 Battery cell, 100G Cell group, 102 Exterior material, 104 Positive electrode tab, 104T Terminal positive electrode tab, 106 Negative electrode tab, 106T Terminal negative electrode tab, 108 Tab group, 110 Compression pad, 210 Front holding body, 210' Rear holding body, 211 Surrounding heat resistant body, 212 Front opening, 212' Rear opening, 220 Front voltage detection portion, 220' Rear voltage detection portion, 222 Front voltage detection line, 222' Rear voltage detection line, 224 Front connector, 224' Rear connector, 230 Positive electrode bus bar, 230' Negative electrode bus bar, 232 Front lateral conductor, 232' Rear lateral conductor, 232a Fastener hole, 233 Fuse, 234 Front vertical conductor, 234' Rear vertical conductor, 310 Front plate, 310a Protrusion, 311 Covering heat resistant body, 311A Covering heat resistant body, 320 Rear plate, 330 Right plate, 340 Left plate, 350 Bottom plate, 352 Thermally conductive adhesive, 360 Top plate

## Claims

1. A battery module comprising:
a battery cell;
a fuse electrically connected to the battery cell and extending in a predetermined direction; and
a heat resistant body at least partially surrounding the fuse around the predetermined direction.

2. The battery module according to claim 1, further comprising:
a voltage detection portion electrically connected to the battery cell; and
a holding body holding the voltage detection portion, wherein
the holding body is provided with at least a part of the heat resistant body.

3. The battery module according to claim 1 or 2, further comprising
an accommodation body accommodating the battery cell, wherein
the accommodation body includes at least a part of the heat resistant body.
